# EUROPEAN PATENT APPLICATION

(11) **EP 1 655 151 A1**
(43) Date of publication of application: **10.05.2006**
(21) Application number: 04771362.3
(22) Date of filing: 06.08.2004
(51) Int. Cl.: B60C 17/06

(54) **METHOD OF MANUFACTURING SUPPORT BODY FOR PNEUMATIC RUN FLAT TIRE**

(30) Priority: 07.08.2003 JP 2003206418
(71) Applicant: Bridgestone Corporation, Tokyo 104-8340 (JP); Bridgestone Cycle Co. Ltd., Ageo-shi, Saitama 3520072 (JP)
(72) Inventor: HATAKEYAMA, Kazuya,c/o BRIDGEST0NE CORPORATION, Chuo-ku, Tokyo 1048340 (JP); ODA, Eizaburou, c/o BRIDGEST0NE CORPORATION, Chuo-ku, Tokyo 1048340 (JP); KONDOU, Youichirou,c/o BRIDGEST0NE CORPORATION, Chuo-ku, Tokyo 1048340 (JP); MATSUO, Tatsuo, c/o BRIDGEST0NE CORPORATION, Chuo-ku, Tokyo 1048340 (JP); MINARI, Akio, c/o BRIDGESTONE CYCLE CO., LTD., Ageo-shi, Saitama 3620072 (JP)
(74) Representative: Whalley, Kevin
(86) International application number: PCT/JP2004/011363
(87) International publication number: WO 2005/014310

(57) **Abstract**

A manufacturing method of a support body for pneumatic run-flat tire is provided, which can make the structures of a mold and a vulcanizer simpler than heretofore.

A metallic support portion is comprised of three parts of a center portion and outside portions of both sides thereof, and a rubber leg portion is vulcanized and formed so as to be integrated to the outside portion, which is one of the parts to configure the support portion.

Further, the center portion and the outside portions are coupled by welding and the like.

Consequently, a mold to form and vulcanize the leg portion can be made smaller than heretofore, and moreover, since the left and right leg portions can be vulcanized and formed by a single mold, the structure of the mold can be made simpler than heretofore.

## Description

### BACKGROUND OF THE INVENTION

### Field of the Invention

The present invention relates to a manufacturing method of a support body for a pneumatic run-flat tire disposed inside the tire so as to be able to drive a considerable distance as it is in case the tire is punctured.

### Description of the Related Art

In general, as a tire capable of run-flat driving with a pneumatic tire, namely, capable of driving a certain distance (hereinafter referred to as run-flat tire) with a safe conscience even when the tire is punctured and its internal pressure becomes 0 kg/cm², there is known a run-flat tire of an inner ring type in which an inner ring (hereinafter referred to suitably as support body) is attached on a rim portion inside the air chamber of the tire (for example, see Patent Document 1).

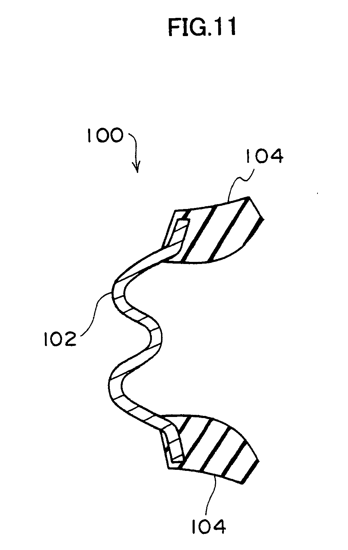

As shown in FIG. 11, this support body 100 is configured with a toroidal support portion 102 comprised of metal and synthetic resin and leg portions 104, comprised of an elastic body such as rubber and the like, are integrated to the end portion of the support portion 102.

With these leg portions 104 attached, the run-flat tire can stabilize driving at the driving time, and operations to fit or remove the support body 100 to and from the rim are made easy.

Here, in a conventional support body 100, the leg portion 104 is attached to the support portion 102 by vulcanizing adhesive in order to secure durability.

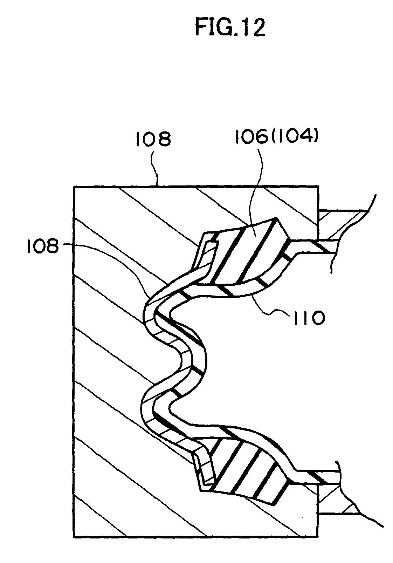

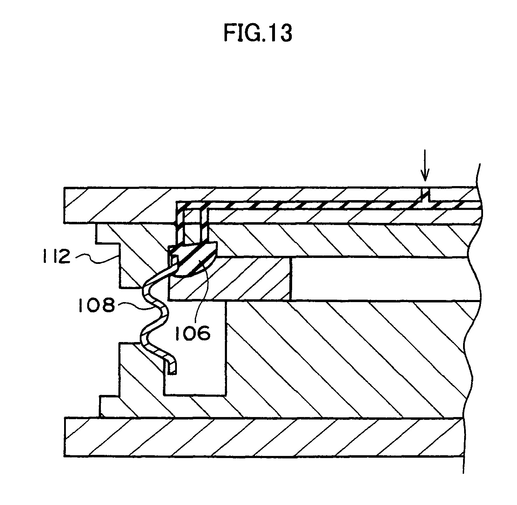

For example, as a method of integrating the rubber leg portion 104 to the support portion 102, the following methods are available.
(1) A method in which a non-vulcanizing rubber member close to the final shape is prepared in advance, and after being preset to a metallic support portion, it is put into a vulcanization mold, and is applied with pressure and temperature by a bladder from the inner side (see FIG. 12. In the Figure, reference numeral 106 denotes a non-vulcanized rubber member, reference numeral 108 a vulcanization mold, and reference numeral 110 a bladder).
(2) A method in which the support portion is set into a vulcanization mold and non-vulcanized rubber member is forcibly injected into the mold so as to be formed and vulcanized by injection (or transfer method) (see FIG. 13. In the Figure, reference numeral 112 denotes a vulcanization mold).
Patent Document 1: Japanese Patent Application Laid-Open No. 10-297226

### SUMMARY OF THE INVENTION

### Problems to be solved by the Invention

Here, the manufacturing method of (1) requires an accurate preset since accuracy at the time of presetting the non-vulcanized rubber into the support portion becomes product accuracy, and also requires a good many number of man-hours. Further, a vulcanizer requires a taking in and out mechanism of the bladder, and this leads to an increase in the equipment cost.

Further, the manufacturing method of (2) requires a core mold which is decomposable inward so as to take out the product after vulcanization. Further, in case the rubbers at both sides are simultaneously formed and vulcanized, the rubber flow path and mold shape become complicated.

Now, in the car industry, various shapes of wheels and tires are being manufactured.

A size of the support body is decided for every size and rim width of the tire to be used, in the case of the support body of the conventional structure, a manufacturing mold and a vulcanization mold of the support body must be prepared for every size of the support body, and a large amount of space for storing these molds is required. In addition, there has been a problem of capital investment becoming a considerable amount.

An object of the present invention, in view of the above described facts, is to provide a manufacturing method of the support body for the pneumatic run-flat tire, in which a mold required for manufacturing the support body of the pneumatic run-flat tire and a structure of the vulcanizer are made simpler than hitherto.

### Means for Solving the Problems

The invention according to claim 1 is a manufacturing method of a support body for a pneumatic run-flat tire including a support portion disposed inside a pneumatic tire and bearing a load when run-flat driving and leg portions provided at both sides in the direction of the tire width of the support portion and abutting against a rim, comprising: a center portion forming process of forming a tire width direction center portion of said support portion; an outside portion forming process of forming tire width direction outside portions of said support portion as separate bodies from said tire width direction center portion; a leg portion forming process of forming the leg portions comprising elastomer integrally to the rim side end portions of said tire width direction outside portions; and a coupling process of coupling said tire width direction outside portions formed with said leg portion to both sides of said tire width direction center portion.

In the manufacturing method of the support body for the pneumatic run-flat tire according to claim 1, in the center portion forming process, a tire width direction center portion of the support portion is formed, and in the outside portion forming process, the tire width direction outside portions are formed.

That is, the support portion is comprised of three parts of the tire width direction center portion and the tire width direction outside portions of both sides thereof. Since the tire has a symmetrical shape on both sides of a tire equatorial plane, the left and the right tire width direction outside portions can be made common with each other.

In the leg portion forming process, the leg portion comprised of elastomer is integrally formed into the rim side end portion of the tire width direction outside portion.

In the coupling process, the tire width direction outside portions, which are formed with the leg portions, are coupled with both sides of the tire width direction center portion, thereby the support body for the run-flat tire is obtained.

Further, in the conventional structure, a mold for forming the leg portions of both the left and right sides in both sides of the support portion inevitably becomes big, and such a big mold has been required in large numbers. However, according to the present invention, since the leg portion is preferably formed for the outside portion in the direction of the tire width which configures a portion of the support portion, and thus, the size of the mold to form the leg portion can be made small, and further, it is sufficient to form merely the leg portion of the one side, and therefore, the structure of the mold can be simplified.

The invention according to claim 2 is a manufacturing method of the support body of the pneumatic run-flat tire according to claim 1, wherein the elastomer is rubber, and the leg portion forming process performs an injection molding and vulcanization of the rubber configuring the leg portion in the outside portion in the direction of the tire width.

In the manufacturing method of the support body of the pneumatic run-flat tire of claim 2, in the leg forming process, the rubber is injection-molded and vulcanized in the rim side end portion of the outside portion in the direction of the tire width, thereby the leg portion having elasticity is integrally formed into the outside portion in the direction of the tire width.

The invention according to claim 3 is a manufacturing method of the support body for the pneumatic run-flat tire of claim 1, wherein the elastomer is rubber, and the leg portion forming process transfer-molds and vulcanizes the rubber configuring the leg portion in the outside portion in the direction of the tire width.

In the manufacturing method of the support body for the pneumatic run-flat tire according to claim 3, in the leg forming process, rubber is transfer-molded and vulcanized in the rim side end portion of the outside portion in the direction of the tire width, thereby the leg portion having elasticity is integrally formed in the outside portion in the direction of the tire width.

The invention according to claim 4 is a manufacturing method of the support body for the pneumatic run-flat tire of claim 1, wherein the elastomer is rubber, and the leg portion forming process compression-molds and vulcanizes rubber configuring the leg portion in the outside portion in the direction of the tire width.

In the manufacturing method of the support body for the pneumatic run-flat tire according to claim 4, in the leg portion forming process, rubber is compression-molded and vulcanized in the rim side end portion of the outside portion in the direction of the tire width, thereby the leg portion having elasticity is integrally formed in the outside portion in the direction of the tire width.

The invention according to claim 5 is a manufacturing method of the support body for the pneumatic run-flat tire of any one of claims 1 to 4, wherein the center portion in the direction of the tire width and the outside portion in the direction of the tire width are formed of metal, and the coupling process partially superposes and welds the center portion in the direction of the tire width and the outside portion in the direction of the tire width.

In the manufacturing method of the support body for the pneumatic run-flat tire according to claim 5, in the coupling process, a metallic center portion in the direction of the tire width and a metallic outside portion in the direction of the tire width are partially superposed and welded, so that the center portion in the direction of the tire width and the outside portion in the direction of the tire width can be firmly coupled.

As a welding method, a conventional publicly known welding method can be used.

The invention according to claim 6 is a manufacturing method of the support body for the pneumatic run-flat tire of any one of claims 1 to 4, wherein the center portion in the direction of the tire width and the outside portion in the direction of the tire width are formed of metal, and the coupling process butt-welds the end portion of the center portion in the direction of the tire width and the end portion of the outside portion in the direction of the tire width.

In the manufacturing method of the support body for the pneumatic run-flat tire according to claim 6, in the coupling process, the metallic center portion in the direction of the tire width and the metallic outside portion in the direction of the tire width are butted and welded, so that the center portion in the direction of the tire width and the outside portion in the direction of the tire width can be firmly coupled.

As a welding method, a conventional publicly known welding method can be used.

The invention according to claim 7 is a manufacturing method of the support body for the pneumatic run-flat tire of claim 5 or 6, wherein the welding portion and the leg portion are separated by at least 10 mm or more.

In case the center portion in the direction of the tire width and the outside portion in the direction of the tire width are coupled by welding, if a welding position is too close to the leg portion, heat at the time of welding is transmitted to the adhering surface of the support portion and the leg portion, resulting in a lowering of adhesive force.

Consequently, it is preferable that the welding portion and the leg portion are separated by at least 10 mm or more.

The invention according to claim 8 is a manufacturing method of the support body for the pneumatic run-flat tire of any one of claims 1 to 4, wherein the coupling process joins the center portion in the direction of the tire width and the outside portion in the direction of the tire width by rivet.

In the manufacturing method of the support body for the pneumatic run-flat tire according to claim 8, in the coupling process, the metallic center portion in the direction of the tire width and the metallic outside portion in the direction of the tire width are coupled by rivet, so that the center portion in the direction of the tire width and the outside portion in the direction of the tire width can be firmly coupled.

The invention according to claim 9 is a manufacturing method of the support body for the pneumatic run-flat tire of any one of claims 1 to 8, wherein the coupling portion between the center portion in the direction of the tire width and the outside portion in the direction of the tire width is provided at a position not contacting the internal surface of the tire at the run-flat tire driving time.

A top portion of the support portion, that is, the portion contacting the internal surface of the tire at the run-flat tire driving time is a region where deformation becomes large at the run-flat tire driving, and therefore, requires a great coupling strength at the coupling portion. Hence, it is preferable that the coupling portion is not placed in the vicinity of the top portion of the support portion contacting the internal surface of the tire.

Further, since the coupling portion between the center portion in the direction of the tire width and the outside portion in the direction of the tire width is uneven and rougher than other portions, it preferably does not contact the internal surface of the tire in view of durability of the tire.

The invention according to claim 10 is a manufacturing method of the support body for the pneumatic run-flat tire of any one of claims 1 to 5 and claim 8, wherein a superposed size between the center portion in the direction of the tire width and the outside portion in the direction of the tire width is changed, so that the support bodys for the pneumatic run-flat tires of a plural types of different sizes can be obtained.

According to the manufacturing method of the support body for the pneumatic run-flat tire of claims 10, a superposed size between the center portion in the direction of the tire width and the outside portion in the direction of the tire width is changed, so that the support bodies for the pneumatic run-flat tires of a plural types of different sizes (at least either of the diameter or the width) can be obtained.

The invention according to claim 11 is a manufacturing method of the support body for the pneumatic run-flat tire of any one of claims 1 to 9, wherein, in the center portion forming process, a plurality of center portions of different sizes in the direction of the tire width are manufactured, and in the coupling process, a plurality of center portions of different sizes in the direction of the tire width are coupled with the outside portions in the direction of the tire width, respectively, thereby the support bodys for a plurality of pneumatic run-flat tires of different sizes are obtained.

According to a manufacturing method of the support body for the pneumatic run-flat tire of claim 11, the center portion in the direction of the tire width of the support portion is used as a common part, and the outside portions of different sizes in the direction of the tire width are manufactured so as to correspond to a plural types of tire and rim assemblies, and the center portion in the direction of the tire width and the outside portion in the direction of the tire width selected from a plurality of types are coupled, so that the support body for the pneumatic run-flat tire to match the desired rim and tire assembly can be obtained.

The invention according to claim 12 is a manufacturing method of the support body for the pneumatic run-flat tire of any one of claims 1 to 9, wherein, in the outside portion forming process, a plurality of outside portions of different sizes in the direction of the tire width are manufactured, and in the coupling process, a plurality of outside portions of different sizes in the direction of the tire width are coupled with the center portion in the direction of the tire width, thereby the support bodys of different sizes for a plurality of pneumatic run-flat tires are obtained.

According to a manufacturing method of the support body for the pneumatic run-flat tire of claim 12, the outside portion in the direction of the tire width of the support portion is used as a common part, and the center portions of different sizes in the direction of the tire width are manufactured so as to correspond to a plural types of tire and rim assemblies, and the outside portion in the direction of the tire width and the center portion in the direction of the tire selected from a plural types are coupled, so that the support body for the pneumatic run-flat tire to match the desired rim and tire assembly can be obtained.

The invention according to claim 13 is a manufacturing method of the support body for the pneumatic run-flat tire of any one of claims 1 to 9, wherein, in the leg forming process, a plurality of outside portions in the direction of the tire width, which are integrally formed with the leg portions of different sizes, are manufactured, and in the coupling process, the center portion in the direction of the tire width is coupled with a plurality of outside portions of different sizes in the direction of the tire width, which are integrally formed with the leg portion, thereby the support bodys of different sizes for the pneumatic run-flat tires are obtained.

According to a manufacturing method of the support body for the pneumatic run-flat tire of claim 13, for example, to form the leg portions of different sizes, plurality of mold are prepared, and the outside portions of a plural types in the direction of the tire width, which are formed with the leg portions of different sizes, are manufactured, and the center portion in the direction of the tire width and the outside portion in the direction of the tire width selected from a plural types are coupled, so that the support body for the pneumatic run-flat tire to match the desired tire and rim assembly can be obtained.

### Effect of the Invention

As described above, according to the manufacturing method of the support body for the pneumatic run-flat tire of the present invention, there is an advantage in that the structures of the mold and the vulcanizer can be made simpler than heretofore.

### BRIEF DESCRIPTION OF THE DRAWINGS

FIG. 1 is a cross sectional drawing of a run-flat-tire;
FIG. 2 is an exploded view of a support body;
FIG 3 is a cross sectional view of a mold for transfer molding and vulcanization;
FIG. 4 is a cross sectional view of a mold for compression molding and vulcanization;
FIG. 5 is a cross sectional view of a mold for injection molding and vulcanization;
FIG. 6 is a cross sectional view of the coupling portion vicinity between the butt-welded center portion and the outside portions;
FIG. 7 is a cross sectional view of the coupling portion vicinity between the riveted center portion and the outside portions;
FIG. 8A is a cross sectional view of a support body using a center portion of narrower width;
FIG. 8B is a cross sectional view of a support body using a center portion of broader width;
FIG. 9A is a cross sectional view of a support body using low outside portions;
FIG. 9B is a cross sectional view of a support body using high outside portions;
FIG. 10A is a cross sectional view of a support body using a low leg portion;
FIG. 10B is a cross sectional view of a support body using a high leg portion;
FIG. 11 is a cross sectional view of a conventional support body;
FIG. 12 is an explanatory drawing showing a state in which the leg portion is formed with a conventional mold with a bladder; and
FIG. 13 is an explanatory drawing showing a state in which the leg portion is formed with a conventional injection mold.

### BEST MODE FOR CARRYING OUT THE INVENTION

### (Outline of Run-flat Tire)

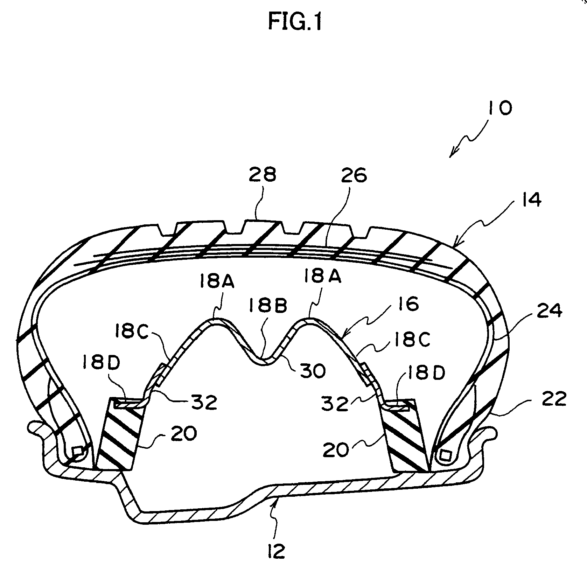

First, a run-flat tire 10 will be described according to FIG. 1.

A run-flat tire 10 in the present embodiment, as shown in FIG. 1, is referred to as a tire which fits a general pneumatic tire 14 and a support body 16 manufactured by the manufacturing method of the present invention to a general rim 12.

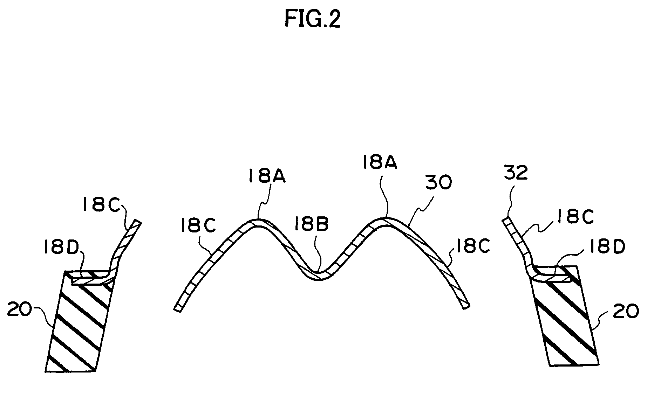

The support body 16 is a medium in a cross sectional shape shown in FIG. 2 formed into an annular shape with the tire rotating axis as a center.

The support body 16 comprises an annular support portion 18 formed by a plate (steel plate in the present embodiment) having high rigidity.

In the support portion 18 shown in FIG. 1, reference numeral 18A denotes a protruded portions protruding outward in the diameter direction, reference numeral 18B denotes a recess portion formed between a pair of protruded portions 18A and protruding inward in the diameter direction, reference numeral 18C denotes a side portion extending approximately in a rim flange direction outside in the width direction of the protruded portion 18A, and reference numeral 18D denotes a flange portion extending to the outside in the direction of the tire axis at a portion (rim side portion) of the inner side in the diameter direction of a side portion 18C.

The flange portion 18D is integrally fixed with an annular leg portion 20.

The leg portion 20 is comprised of elastomer (rubber in the present embodiment), and a cross sectional shape thereof along the axis direction is approximately rectangular.

This leg portion 20, as shown in FIG 1, is disposed inside a bead portion 22 of the pneumatic tire 14 on the rim 12.

As shown in FIG. 1, the rim 12 fitting the support body 16 is a standard rim available in the market, which corresponds to a size of the pneumatic tire 14.

The pneumatic tire 14 in the present embodiment has a structure of a general pneumatic tire, comprising: a pair of bead portions 22; a toroid carcass 24 extending across both bead portions 22; a plurality of belt layers 26 (two in the present embodiment) positioned at a crown portion of the carcass 24; and a tread portion 28 formed on the upper part of the belt layer 26.
(Manufacturing Method of Support body)
The support portion 18 of the present embodiment is structured by coupling a center portion 30 on the center in the direction of the tire width and outside portions 32 on the outside in the direction of the tire width.

The center portion 30 and the outside portions 32 are formed by roll forming and the like, respectively.

The rubber leg portions 20 of the present embodiment are vulcanized and formed on the flange portions 18D of the outside portions 32.

The support body 16 of the present embodiment is obtained by a method to be described later, which couples the outside portions 32, on which the leg portions 20 are vulcanized and adhered in advance, and the center portion 30.

As a method of vulcanizing and forming the rubber leg portion 20, there is transfer molding vulcanization, compression molding vulcanization, injection molding vulcanization, and the like.

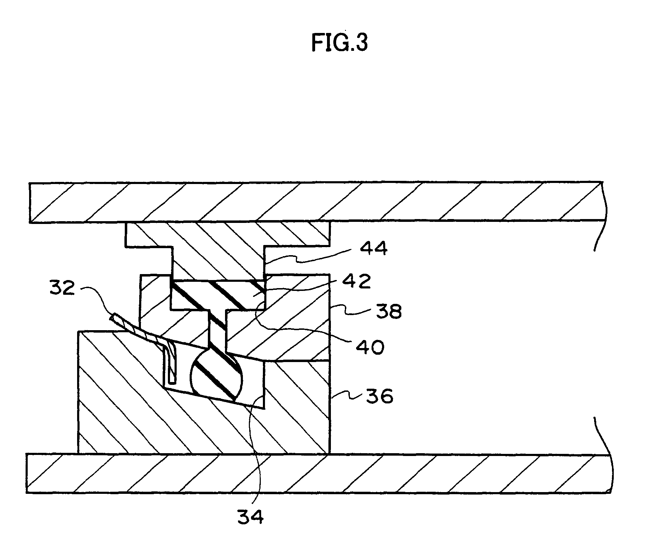

Transfer molding vulcanization, for example, as shown in FIG 3, uses a lower mold 36 and an upper mold 38 that nip and fix the outside portion 32 and configure a cavity 34 to mold the leg portion 20, unvulcanized rubber 42 inside a pot 40 is pressed into the cavity by a plunger 44, and after that, the rubber is heated for a predetermined period of time and vulcanized, and is adhered to the outside portion 32 by vulcanization.

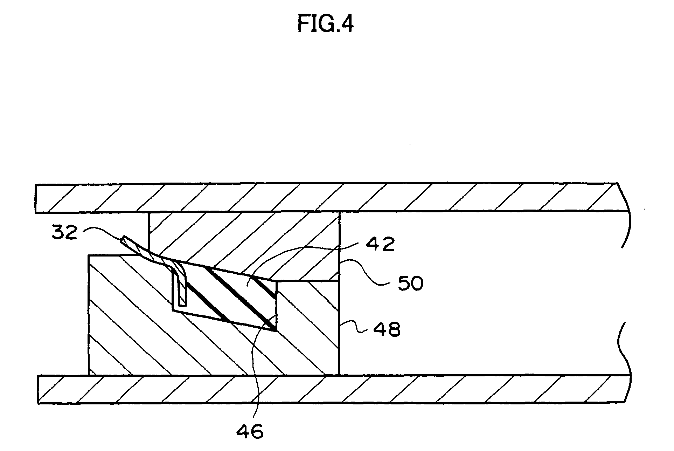

Compression molding vulcanization, for example, as shown in FIG. 4, uses a lower mold 48 and an upper mold 50 that nip and fix the outside portion 32 and configure a cavity 46 to mold the leg portion 20, unvulcanized rubber 42 filled into the cavity 46 is heated for a predetermined period of time so as to vulcanize and adhere the rubber to the outside portion 32 by vulcanization.

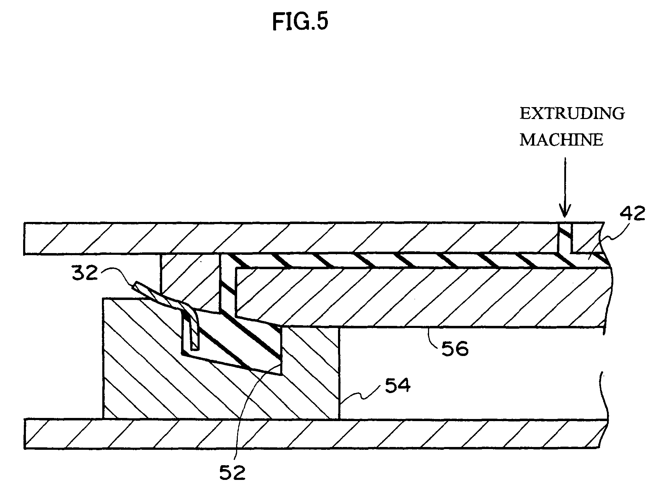

Further, injection molding vulcanization, for example, as shown in FIG. 5, uses a lower mold 54 and an upper mold 56 that nip and fix the outside portion 32 and configure a cavity 52 to mold the leg portion 20, unvulcanized rubber 42 is pushed into the cavity 52 at a high pressure by using an unillustrated extruding machine, and after that, the rubber is heated so as to be formed.

Next, the coupling method of the center portion 30 and the outside portions 32 will be described.

In the present embodiment, as shown in FIG. 1, a portion of the center portion 30 and a portion of the outside portion 32 are overlapped and spot-welded.

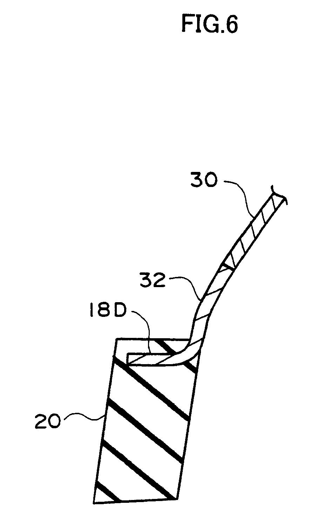

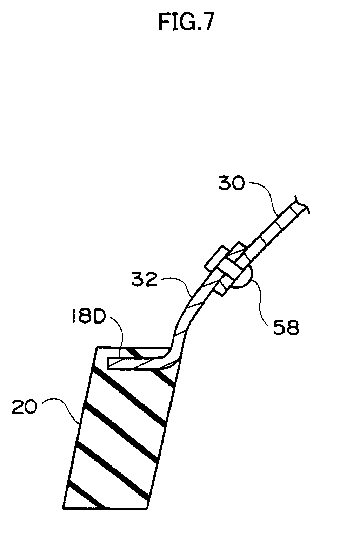

As shown in FIG. 6, the end portion of the center portion 30 and the end portion of the outside portion 32 may be butt-welded, and as shown in FIG. 7, a portion of the center portion 30 and a portion of the outside portion 32 may be overlapped and coupled by a rivet 58.

When the coupling is performed by welding, to control the lowering of the adhesive strength of the leg portions 20, it is preferable to separate the welding portion and the leg portion 20 by at least 10 mm or more.

When the coupling is performed by the rivets 58, the quality of material, the diameter, and the quantity of the rivets 58 are decided on the basis of the conditions such as a loading capacity of the vehicle and the like. The position of the rivets 58 may be on the same circumference or staggeredly disposed about a circumference.

Further, the coupling portion between the center portion 30 and the outside portion 32 is preferably disposed at a position not contacting the internal surface of the tire when run-flat driving.

In the present embodiment, the metallic support portion 18 is comprised of three parts, and the rubber leg portions 20 may be vulcanized and formed so as to be integrated to the outside portion 32, which is one of the parts configuring the support portion 18, and therefore, a mold to vulcanize and form the leg portion 20 can be made small, and moreover, since the left and right leg portions 20 can be vulcanized and formed by a single mold, the structure of the mold can be made simpler than heretofore.

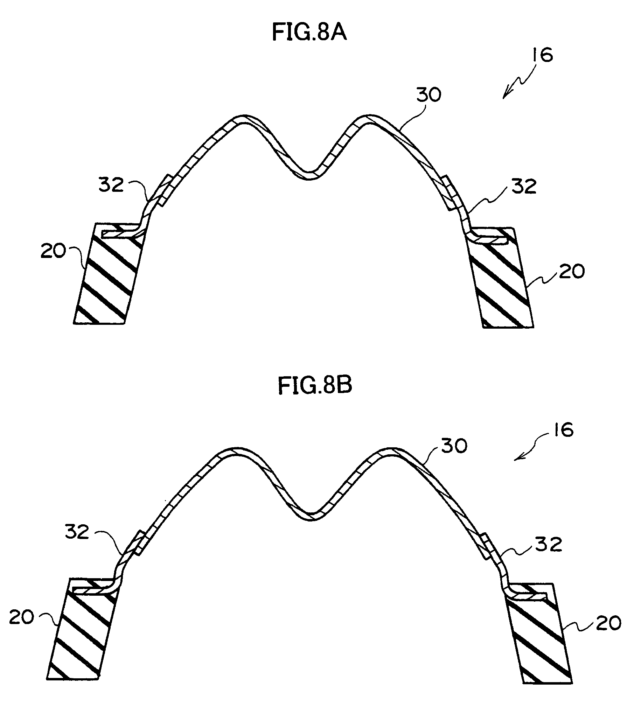

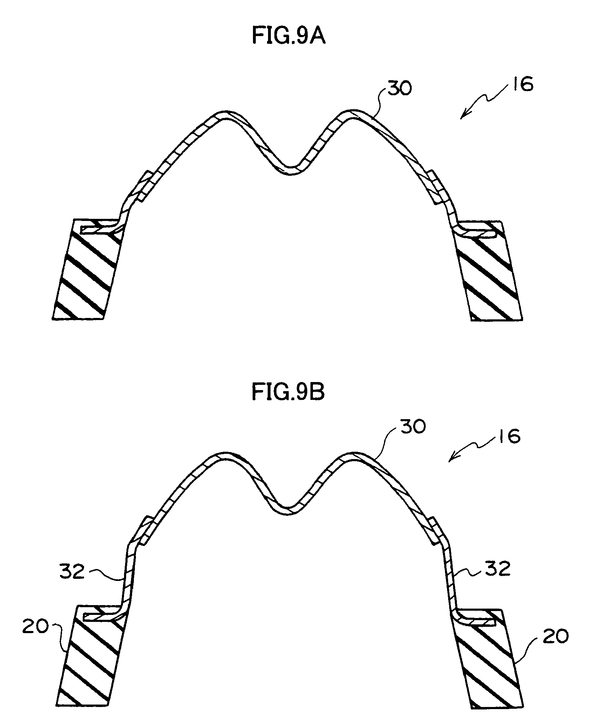

Further, if many units of the outside portion 32 are manufactured as a common part, and are attached with the leg portions 20 and plural types of center portions 30 of different sizes are manufactured, a desired center portion 30 is selected from the plural types. By coupling the outside portions 32 and the selected center portion 30, the support body 16 most appropriate to the run-flat tire 10 of the desired size can be obtained. In this manner as well, the support bodies 16 to match the various sizes of the run-flat tires 10 can be simply obtained (see FIGS. 8A and 8B. In FIGS.8A and 8B, the outside portions 32 and the leg portions 20 are all the same size, and in FIG. 8A, the center portion 30 of a narrower width is used, and in FIG. 8B, the center portion 30 of a broader width is used).
Further, if many units of the center portion 30 are manufactured as a common product and plural types of outside portions 32 of different sizes are manufactured and attached with the leg portions 20, then by selecting desired outside portions 32 from the plural types and coupling the selected outside portions 32 and the center portion 30, the support body 16 most suitable to the run-flat tire 10 of the desired size can be obtained. By so doing, the support bodies 16 to match the run-flat tires 10 of various sizes can be simply obtained (see FIGS. 9A and 9B. In FIGS. 9A and 9B, the center portion 30 and the leg portions 20 are all the same size, and in FIG. 9A, a low outside portion 32 is used, and in FIG. 9B, a high outside portion 32 is used).

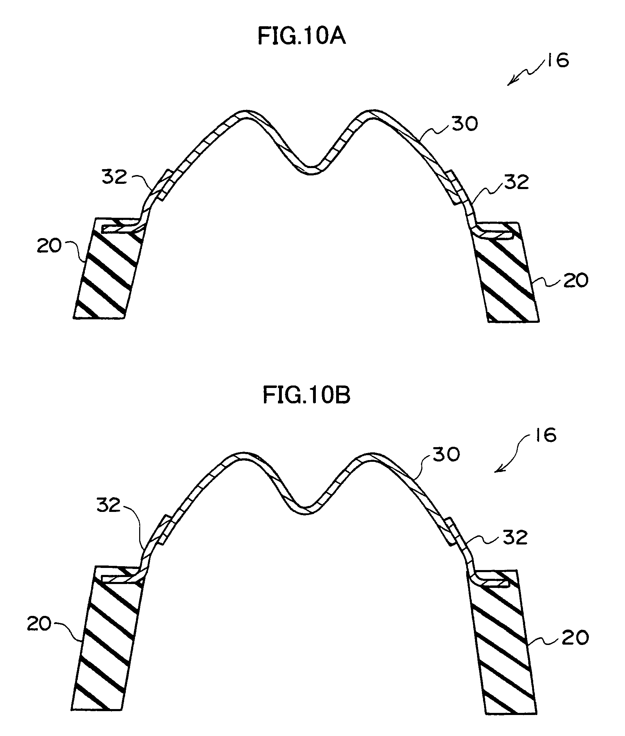

Further, if many units of the center portion 30 and many units of the outside portion 32 are each manufactured as the common parts, and plural types of mold are prepared to form leg portions 20 of different sizes, then a plurality of outside portions 32, which are formed with the leg portions 20 of different sizes, are manufactured. By attaching outside portions 32 with the desired leg portions 20 selected from the plural types, and coupling outside portions 32 attached with the selected leg portions 20 to the center portion 30, the support body 16 that is most suitable to the run-flat tire 10 of the desired size can be obtained. By so doing, the support bodies 16 to match the run-flat tires 10 of various sizes can be simply obtained (see FIGS. 10A and 10B. In FIGS. 10A and 10B, the center portion 30 and the outside portions 32 are both all the same size, and in FIG. 10A, a low leg portion 20 is used, and in FIG. 10B, a high leg portion 20 is used).

In addition to the above described methods, by changing the size of the overlap of the center portion 30 and the outside portions 32, plural types of support body 16, different at least in either diameter or width, can be obtained.
[Other Embodiments]
In the above described embodiment, while the support portion 18 has been comprised of a total of three parts, one center portion 30 and two outside portions 32, depending on the circumstances, although the coupling operation may be increased, the support portion 18 may be comprised of four or more parts.

Further, in the above described embodiment, while the center portion 30 and the outside portions 32, respectively, have been formed by steel plate the center portion 30 and the outside portions 32 may be formed by a different kind of metal. However, in view of corrosiveness, the same kind of metal is preferable for the center portion 30 and the outside portions 32.

Further, in the above described embodiment, while the support portion 18 (center portion 30 and outside portions 32) has been formed by steel plate, the present invention is not limited thereto, and the support portion 18 may be formed by a metal other than the steel plate, and may be formed by a material other than metal (for example, synthetic resin and the like) or a composite body of different materials.

Further, in the above described embodiment, while a description has been made of welding and riveting as methods of coupling between the center portion 30 and the outside portions 32, the present invention is not limited thereto, and other methods of coupling such as adhesive bonding and the like may be used.

Further, in the above described embodiment, while the leg portions 20 have been formed by rubber, it may be formed by other materials than rubber, for example, synthetic resin having elasticity (for example, urethane resin and the like).

### INDUSTRICAL APPLICABILITY

The present invention is applicable for manufacturing a support body for pneumatic run-flat tires, disposed inside the tire to enable driving a considerable distance in a state when the tire is punctured.

### DESCRIPTION OF REFERENCE NUMERALS

- 10:: Run-flat tire
- 12:: Rim
- 14:: Tire
- 16:: Support body
- 20:: Leg portion
- 30:: Center portion
- 32:: Outside portion
- 58:: Rivet

## Claims

1. A manufacturing method of a support body for a pneumatic run-flat tire including a support portion disposed inside a pneumatic tire and bearing a load when run-flat driving and leg portions provided at both sides in the direction of the tire width of the support portion and abutting against a rim, comprising:
a center portion forming process of forming a tire width direction center portion of said support portion;
an outside portion forming process of forming tire width direction outside portions of said support portion as separate bodies from said tire width direction center portion;
a leg portion forming process of forming the leg portions comprising elastomer integrally to the rim side end portions of said tire width direction outside portions; and
a coupling process of coupling said tire width direction outside portions formed with said leg portion to both sides of said tire width direction center portion.

2. The manufacturing method of the support body of the pneumatic run-flat tire of claim 1, wherein said elastomer is rubber, and said leg portion forming process performs injection molding and vulcanization on the rubber configuring said leg portion to said tire width direction outside portion.

3. The manufacturing method of the support body for the pneumatic run-flat tire of claim 1, wherein said elastomer is rubber, and said leg portion forming process transfer-molds and vulcanizes the rubber configuring said leg portion to said tire width direction outside portion.

4. The manufacturing method of the support body for the pneumatic run-flat tire of claim 1, wherein said elastomer is rubber, and said leg portion forming process compression-molds and vulcanizes rubber configuring said leg portion in said tire width direction outside portion.

5. The manufacturing method of the support body for the pneumatic run-flat tire of any one of claims 1 to 4, wherein said tire width direction center portion and said tire width direction outside portion are formed of metal, and said coupling process, partially superposes and welds said tire width direction center portion and said tire width direction outside portion.

6. The manufacturing method of the support body for the pneumatic run-flat tire of any one of claims 1 to 4, wherein said tire width direction center portion and said tire width direction outside portion are formed of metal, and said coupling process butt-welds an end portion of said tire width direction center portion and the end portion of said tire width direction outside portion.

7. The manufacturing method of the support body for the pneumatic run-flat tire of any one of claims 5 or 6, wherein the welding portion and said leg portion are separated by at least 10 mm or more.

8. The manufacturing method of the support body for the pneumatic run-flat tire of any one of claims 1 to 4, wherein said coupling process joins said tire width direction center portion and said tire width direction outside portion by rivets.

9. The manufacturing method of the support body for the pneumatic run-flat tire of any one of claims 1 to 8, wherein the coupling portion between said tire width direction center portion and said tire width direction outside portion is provided at a position not contacting the internal surface of the tire when run-flat tire driving.

10. The manufacturing method of the support body for the pneumatic run-flat tire of any one of claims 1 to 5 and claim 8, wherein by changing an overlap dimension between said tire width direction center portion and said tire width direction outside portion, so that the support bodies for pneumatic run-flat tires of a plurality of types of different sizes are obtained.

11. The manufacturing method of the support body for the pneumatic run-flat tire of any one of claims 1 to 9, wherein, in said center portion forming process, a plurality of said tire width direction center portions of different sizes are manufactured, and in said coupling process, a plurality of said tire width direction center portions of different sizes are, respectively, coupled with said tire width direction outside portions thereby the support bodies for a plurality of pneumatic run-flat tires of different sizes are obtained.

12. The manufacturing method of the support body for the pneumatic run-flat tire of any one of claims 1 to 9, wherein, in said outside portion forming process, a plurality of said tire width direction outside portions of different sizes are manufactured, and in said coupling process, said tire width direction center portions are coupled with a plurality of said tire width direction outside portions of different sizes, thereby the support bodies for a plurality of pneumatic run-flat tires of different sizes are obtained.

13. The manufacturing method of the support body for the pneumatic run-flat tire of any one of claims 1 to 9, wherein, in said leg portion forming process, a plurality of said tire width direction outside portions, which are integrally formed with the leg portions of different sizes, are manufactured, and in said coupling process, the plurality of tire width direction outside portions of different sizes, which are integrally formed with said leg portions, are coupled with said tire width direction center portions, thereby the support bodies for a plurality of pneumatic run-flat tires of different sizes are obtained.
